# EUROPÄISCHE PATENTSCHRIFT

(11) **EP 0 590 294 B1**
(45) Veröffentlichungstag und Bekanntmachung des Hinweises auf die Patenterteilung: **01.05.1996**
(21) Anmeldenummer: 93113323.5
(22) Anmeldetag: 20.08.1993
(51) Int. Cl.: B64C 13/08, G05G 5/05

(54) **Zentriereinheit für ein Flugzeugruder**
Centering unit for an aircraft control surface
Unité de centrage pour une gouverne d'avion

(30) Priorität: 26.08.1992 DE 4228390
(43) Veröffentlichungstag der Anmeldung: 06.04.1994
(73) Patentinhaber: Daimler-Benz Aerospace Airbus Gesellschaft mit beschränkter Haftung, D-21129 Hamburg (DE)
(72) Erfinder: Ehlers, Peter, D-22459 Hamburg (DE)
(74) Vertreter: Hansmann, Dierk, Dipl.-Ing.

(56) Entgegenhaltungen:
- DE-A- 1 177 492
- FR-A- 1 071 019
- US-A- 2 611 561
- US-A- 2 756 610

## Beschreibung

Die Erfindung bezieht sich auf eine Zentriereinheit für ein Flugzeugruder, wodurch die Ventileingangshebel zur Steuerung der Ruderbetätigung mittels Federkraft in ihre Neutrallage zurückgeführt werden.

Bei Flugzeugen wird die Steuerung des Seitenruders beispielsweise dadurch erreicht, daß die Steuerbewegung von den Steuerpedalen des Piloten über einen Seilzug in eine Mischer-Einheit eingeleitet wird, in der eine Umsetzung der Seilbewegung auf ein Gestänge erfolgt, wobei verschiedene weitere Steuersignale, beispielsweise vom Autopiloten, von der Trimmung und von der Gierdämpfung, berücksichtigt werden. Hierzu sind entsprechend ansteuerbare elektrische Antriebe vorgesehen, deren Ausgangsbewegungen den vom Piloten eingegebenen Steuerbewegungen in der Mischereinheit überlagert werden. Das Gestänge seinerseits ist mit den Ventileingangshebeln der hydraulischen Servoeinheiten verbunden und übernimmt damit die Ansteuerung der hydraulischen Stelleinheiten für das Seitenruder. Zur Realisierung einer automatischen Gierdämpfung in einer derartigen Steuerung müssen von dem betreffenden Gierdämpfungssystem her kleine schnelle Bewegungen in das Seitenruder eingeleitet werden. Hierzu ist beispielsweise ein elektrischer Stellmotor vorgesehen, der die Servosteuerhebel entsprechend betätigt.

Gemäß der DE-PS 1 177 492 ist zum Einsatz in Flugzeugsteuerungen ein Federelement vorgesehen, wodurch die Rückführung eines Ruders in die Neutrallage erreicht wird.

Dieses Federelement ist als Federstoßstange mit zentrierender Wirkung ausgebildet. Diese Lösung arbeitet mit zwei unterschiedlichen Federn, denen die Aufgabe zufällt, die Federkennlinie des Elementes in den kleinen Winkelbereichen steiler und in den großen Winkelbereichen flacher zu gestalten. Aufgrund des flachen Kraftverlaufs in den äußeren Winkelbereichen wird sichergestellt, daß die durch die elektrischen Antriebe zu überwindenden maximalen Federkräfte relativ gering bleiben, was sich günstig auf das Gewicht der Antriebe und auf deren Energieverbrauch auswirkt. Das hier angewandte Prinzip der Federstoßstange ist, insbesondere wegen der erforderlichen Gleitführungen, sehr reibungsbehaftet. Dies kann namentlich bei kleinen Auslenkungen aus der Mittelstellung dazu führen, daß eine genaue Rückführung in die Mittelstellung nur sehr unvollkommen gelingt. Um diesem Verhalten abzuhelfen, ist das Federelement so ausgebildet, daß eine Auslenkung aus der Mittelstellung nur gegen eine voreingestellte Federkraft erfolgen kann. Die Kennlinie des Elementes zeigt daher an der Stelle alfa = 0° einen Sprung.

Die FR-PS 10 71 019 zeigt eine weitere Federeinrichtung für eine Flugzeugsteuerung, wobei jedoch anstelle einer Federstoßstange ein Hebelmechanismus verwendet wird. Diese Einrichtung hat ebenfalls eine Kennlinie, die im Bereich kleiner Winkel einen steilen und im Bereich großer Winkel einen flachen Anstieg aufweist, wobei bei 0° wieder ein Sprung vorliegt. Dabei wird der unterschiedliche Anstieg der Kennlinie allein durch die während der Auslenkung stattfindende Veränderung der jeweils wirksamen Hebelarme erreicht, wobei der erzielbare Unterschied im Anstieg des steilen und des flachen Bereiches aufgrund der geometrischen Verhältnisse nur gering sein kann. Obwohl diese Einrichtung aufgrund der Ausbildung als Hebelmechanismus ein wesentlich verbessertes Reibungsverhalten zeigt, ist sie zum Zentrieren von Ventileingangshebeln nicht geeignet. Dies liegt zum einen daran, daß eine Kennlinie mit einem deutlichen Unterschied der Steigungen, die sowohl im steilen als auch im flachen Bereich einen annähernd linearen Verlauf zeigt, mit dieser Zentriereinrichtung nicht realisierbar ist. Zum anderen hat das Auftreten eines Sprunges an der Stelle alfa = 0 im Gegensatz zu einem stetigen Verlauf zur Folge, daß bei Verwendung eines elektrischen Stellmotors, beispielsweise für die Gierdämfung, eine höhere Antriebsleistung des Stellmotors erforderlich ist.

Ein Hinweis, der zu einer auf einer Hebelmechanik basierenden Zentriereinrichtung mit einer Kennlinie mit annähernd linearem Verlauf und einem deutlichen Unterschied der Steigungen sowohl im steilen als auch im flachen Bereich führen würde, ist den vorgenannten Dokumenten nicht zu entnehmen.

Demgemäß liegt der Erfindung die Aufgabe zugrunde, eine gattungsgemäße Zentriereinheit, basierend auf einem Hebelmechanismus, so auszubilden, daß sie eine Kennlinie aufweist, die im Bereich kleiner Winkel einen steilen, im Bereich großer Winkel einen flachen und in der Umgebung von alfa = 0° einen stetigen Verlauf zeigt.

Diese Aufgabe wird bei einer gattungsgemäßen Zentriereinheit durch die kennzeichnenden Merkmale des Patentanspruchs 1 gelöst.

Vorteilhafte Weiterbildungen der Erfindung sind in den Unteransprüchen angegeben.

Damit steht eine Zentriereinheit zur Verfügung, die sich gegenüber einer Lösung mit einer Federstoßstange durch wesentlich niedrigere Reibwerte auszeichnet und im Falle einer Gierdämpfung mit einem relativ kleinen Stellmotor auskommt.

Die Erfindung ist anhand der Zeichnung dargestellt und nachfolgend näher erläutert. Es zeigen
- Fig. 1: eine Prinzipdarstellung der Zentriereinheit und
- Fig. 2: eine Federkennlinie.

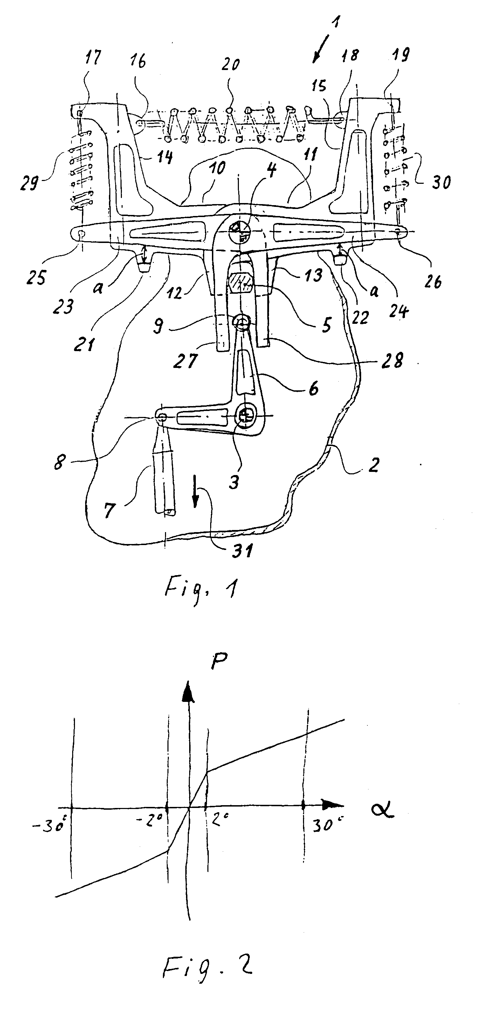

Figur 1 zeigt im Prinzip eine Zentriereinheit 1, die wie folgt aufgebaut ist. Seitens des Gehäuses 2 sind gehäusefest ein Gelenkzapfen 3 und Lagerzapfen 4 angeordnet, auf deren Verbindungslinie sich ein gehäusefester Anschlag 5 befindet. Das schematisch angedeutete Gehäuse 2 enthält die Fixpunkte der als Hebelkinematik ausgebildeten Zentriereinheit 1 und ist seinerseits fest mit der hier nicht gezeigten Struktur des Flugzeuges verbunden. Auf dem Gelenkzapfen 4 sind zwei Hauptarme 10,11 in spiegelbildlicher Anordnung schwenkbar gelagert, die jeweils aus einem kurzen und einem langen Hebel gebildet sind und somit eine Zange bilden. Die Hauptarme 10,11 weisen annähernd in mittlerem Abstand zum Gelenkpunkt 4 je eine Mitnehmernase 21,22 auf und sind an ihren Enden durch eine Zugfeder 20 überbrückt, die in Ösen 16 bzw. 18 eingreift. Die kurzen Hebel sind als Anschlagarme 12,13 ausgebildet und liegen infolge der Zugfeder 20 beidseitig an dem gehäusefesten Anschlag 5 an. Eine derartige Anordnung wird auch Klapphebelmechanismus genannt. Andere fachübliche Bezeichnungen sind Clapper Mechanism oder Override Clapper Mechanism.

Außer der vorbeschriebenen ersten Zange ist eine zweite Zange vorgesehen, die aus zwei Winkelhebeln gebildet ist, wobei die Winkelhebel jeweils aus einem Tastarm 26,27 und einem Federarm 23,24 bestehen und ebenfalls auf dem Gelenkzapfen 4 schwenkbar gelagert sind. Die Enden der Federarme 23,24 sind über vorgespannte Zugfedern in Form von Tastfedern 29,30 mit den Enden der Hauptarme 10,11 der ersten Zange verbunden. Hierzu sind diese Federn in entsprechende Ösen 17 und 25 bzw. 19 und 26 eingehängt. Infolge der Tastfedern 29,30 liegen die Tastarme 27,28 am Anschlag 5 an, wobei deren über den Anschlag 5 hinausragende Bereiche einen Schnabel mit einer Klaffung bilden, die sich aus der Breite des Anschlages 5 ergibt und in dem überstehenden Bereich eine konstante Weite aufweist. Ferner ist ein um den in der Verlängerung der Verbindungslinie des Lagerzapfens 4 mit dem Anschlag 5 angeordneten gehäusefesten Gelenkzapfen 3 schwenkbarer Ansteuerhebel 6 mit einer Rolle 9 vorgesehen, die in die zwischen den Tastarmen 27 und 28 bestehende Klaffung eingreift. Hierbei besteht zwischen der Rolle 9 und den Tastarmen 27,28 ein möglichst geringes Spiel. Die an den Hauptarmen 10,11 der ersten Zange angeordneten Mitnehmernasen 21,22 weisen gegenüber den betreffenden Kanten der Federarme 23,24 je einen Abstand a auf. In der gezeigten Beispielausführung ist der auf dem Gelenkzapfen 3 schwenkbare Ansteuerhebel 6 winkelförmig ausgebildet und über einen Gelenkpunkt 8 mit einer Steuerstange 7 verbunden. Die Federn 20,29,30 sind so bemessen, daß die jeweilige Endkraft der Feder 29 bzw. 30 kleiner ist als die Vorspannung der Zugfeder 20, wobei jedoch die Feder 20 eine flachere Kennlinie aufweist als die Federn 29 und 30. Die Steuerstange 7 steht mit den Ventileingangshebeln der Steuerhydraulik über ein Gestänge mit einer Mischereinheit und schließlich über einen Seilzug mit den Pedalen des Piloten in Verbindung. Das Bild zeigt alle Hebel der Zentriereinheit in Neutrallage.

Führt nun die Steuerstange 7 infolge eines Pedalausschlages eine entsprechende Bewegung in Richtung des Pfeiles 31 aus, so werden die nicht gezeigten Ventileingangshebel entsprechend betätigt, und der gewünschte Ruderausschlag über die betreffenden hydraulischen Betätigungselemente ausgeführt. Dabei wird über die Rolle 9 auf den Tastarm 27 eine Kraft ausgeübt, die dem Federarm 24 eine Rechtsdrehung um den Gelenkzapfen 4 erteilt. Hierdurch erfährt die Feder 30 eine Dehnung, wobei sie eine entsprechende Kraft in den Ösenarm 15 einleitet, der seinerseits über die Zugfeder 20 eine Zugkraft auf den Ösenarm 14 ausübt. Damit wirkt auf diesen ein rechtsdrehendes Moment, so daß er sich über den Anschlagarm 13 gegen den gehäusefesten Anschlag 5 abstützt, ohne selbst ausgelenkt zu werden. Hierbei bewegt sich nur der Federarm 24, da die Kraft der Feder 30 zum Dehnen der Zugfeder 20 nicht ausreicht. Wird die Steuerbewegung vom Piloten wieder zurückgenommen so wird der Tastarm 27 durch die Feder 30 in Abhängigkeit von der Bewegung der Steuerstange 7 in seine Neutrallage zurückgeführt. Führt die Steuerstange 7 nun eine dem Pfeil 31 entgegengerichtete Bewegung aus, so wird die Feder 29 gedehnt. Wird über die Steuerstange 7 eine gegenüber dem vorbeschriebenen Beispiel größere, beispielsweise wieder in Pfeilrichtung 31 verlaufende Bewegung in den Ansteuerhebel 6 eingeleitet, so wird zunächst wieder die Feder 30 gedehnt bis der Federarm 24 an der Mitnehmernase 22 anliegt. Im weiteren Verlauf der Bewegung wird jetzt auch die Zugfeder 20 gedehnt, wobei der Kraftverlauf durch deren Federkonstante bestimmt wird. Bei Einleitung einer Bewegung in Gegenrichtung ist der Ablauf entsprechend. Bei Beendigung der Steuermaßnahme wird der Winkelhebel 6, wie vorbeschrieben, durch eine entsprechende Bewegung der Steuerstange 7 in seine Neutrallage zurückgeführt. Aufgrund der vorbeschriebenen Doppelanordnung zweier federbelasteter Hebelzangen wird die Zentriereinheit im wesentlichen durch einen zweistufigen Klapphebelmechanismus gebildet. Damit steht eine Zentriereinheit zur Verfügung, die sich gegenüber der bisherigen Lösung mit einer Federstoßstange durch wesentlich niedrigere Reibwerte auszeichnet. Hierdurch wird die Möglichkeit eröffnet, ein entsprechendes Steuerungssystem erfolgreich mit einer automatischen Gierdämpfung auszurüsten.

Fig. 2 zeigt die resultierende Federkennlinie der Zentriereinheit, wobei die Federkraft P in Abhängigkeit vom wirksamen Ruderausschlag etwa im Bereich ± 30° dargestellt ist.

Das Bild zeigt, daß die Kennlinie im Bereich kleiner Winkel, also im Bereich ± 2°, einen steileren Anstieg aufweist als in den übrigen Bereichen.

Hierdurch wird in Verbindung mit der reibungsarmen Ausbildung der Zentriereinheit erreicht, daß der nach einer Steuermaßnahme verbleibende Restausschlag innerhalb eines vorgegebenen sehr engen Toleranzfeldes liegt.

Der automatische Betrieb des Steuersystems hat zur Folge, daß die mit der Mischereinheit zusammenwirkenden elektrischen Antriebe laufend bestimmte Bewegungen in die Mischereinheit eingeben und dabei stets die Federkräfte der Zentriereinheit überwinden müssen.

Aufgrund des aufgezeigten flachen Kraftverlaufs in den äußeren Winkelbereichen wird nun sichergestellt, daß die erforderliche Leistung der besagten elektrischen Antriebe zur Überwindung der Federkräfte relativ gering ist. Dies wirkt sich günstig auf das Gewicht der Antriebe und auf deren Energieverbrauch aus.

## Patentansprüche

1. Zentriereinheit für ein Flugzeugruder, wodurch die Ventileingangshebel zur Steuerung der Ruderbetätigung im Fehlerfall mittels Federkraft in ihre Neutrallage zurückgeführt werden,
dadurch **gekennzeichnet,** daß eine erste Zange, bestehend aus zwei Hauptarmen (10,11) vorgesehen ist, die jeweils aus einem kurzen und einem langen Hebel gebildet sind und auf einem gehäusefesten Gelenkzapfen (3) schwenkbar gelagert sind, wobei die Hauptarme (10,11) annähernd in mittlerem Abstand zum Gelenkpunkt je eine Mitnehmernase (21,22) aufweisen und an ihren Enden durch eine Zugfeder (20) überbrückt sind, so daß die als Anschlagarme (12,13) ausgebildeten kurzen Hebel infolge der Zugfeder (20) an einem gehäusefesten Anschlag (5) beidseitig anliegen, daß ferner eine zweite aus zwei Winkelhebeln gebildete Zange vorgesehen ist, wobei die Winkelhebel jeweils aus einem Tastarm (27, 28) und einem Federarm (23,24) bestehen und ebenfalls auf dem Gelenkzapfen (3) schwenkbar gelagert sind und die Enden der Federarme (23,24) je über eine Tastfeder (29,30) derart mit je einem Ende eines Hauptarmes (10,11) der ersten Zange in Verbindung stehen, daß infolge der der Wirkung der Tastfedern (29,30) auch die Tastarme (27,28) am Anschlag (5) anliegen, wobei sie so über den Anschlag 5 hinausragen, daß sie miteinander einen Schnabel bilden, der eine durch den Anschlag (5) definierte Klaffung von konstanter Breite aufweist, daß ferner ein um einen Lagerpunkt schwenkbarer Ansteuerhebel (6) mit einer Rolle (9) vorgesehen ist, die in die zwischen den Tastarmen (27,28) bestehende Klaffung eingreift und daß ferner die Mitnehmernasen (21,22) an den Hauptarmen (10,11) der ersten Zange gegenüber den betreffenden Kanten der Federarme (23,24) in einem Abstand (a) angeordnet sind, so daß eine durch die Rolle (9) bewirkte Auslenkung eines Tastarms (27,28) zunächst entgegen der Kraft der betreffenden Tastfeder (29,30) erfolgt und nach Erreichen der betreffenden Mitnehmernase (21,22) die weitere Auslenkung entgegen der Kraft der Zugfeder (20) erfolgt.

2. Zentriereinheit nach Anspruch 1,
dadurch **gekennzeichnet**, daß der Lagerpunkt des Ansteuerhebels (6) durch einen in der Verlängerung der Verbindungslinie des Lagerzapfens (4) mit dem Anschlag (5) angeordneten gehäusefesten Gelenkzapfen (3) realisiert ist.

3. Zentriereinheit nach Anspruch 1,
dadurch **gekennzeichnet**, daß der Lagerpunkt des Ansteuerhebels (6) durch den Lagerzapfen (4) realisiert ist, auf dem auch die Zangen gelagert sind.

## Claims

1. Centring unit for an aircraft rudder, whereby the valve inlet lever for controlling the rudder actuation is returned to its neutral position by means of spring force in the case of a fault, characterised in that a first pair of jaws consisting of two main arms (10, 11) is provided, which arms are in each case formed from a short and a long lever and are pivotably mounted on a pivot pin (3) which is rigid with the housing, the main arms (10, 11) having a respective driving lug (21, 22) approximately half-way with respect to the fulcrum and being bridged at their ends by a tension spring (20), so that the short levers, which are constructed as stop arms (12, 13), rest against a stop (5), which is rigid with the housing, on both sides due to the tension spring (20), that a second pair of jaws which is formed from two bell-crank levers is also provided, the bell-crank levers in each case consisting of a sensing arm (27, 28) and a spring arm (23, 24) and also being pivotably mounted on the pivot pin (3), and the ends of the spring arms (23, 24) each being connected via a sensing spring (29, 30) to a respective end of one main arm (10, 11) of the first pair of jaws such that the sensing arms (27, 28) also rest against the stop (5) due to the action of the sensing springs (29, 30), which sensing arms project beyond the stop (5) such that together they form a mouth whose opening is defined by the stop (5) and is of a constant width, that a control lever (6), which is pivotable about a bearing point, is provided with a roller (9) which engages in the opening between the sensing arms (27, 28), and that the driving lugs (21, 22) are disposed on the main arms (10, 11) of the first pair of jaws at a distance (a) from the relevant edges of the spring arms (23, 24), so that a deflection of a sensing arm (27, 28) effected by the roller (9) initially takes place against the force of the relevant sensing spring (29, 30) and, after the relevant driving lug (21, 22) has been reached, further deflection takes place against the force of the tension spring (20).

2. Centring unit according to claim 1, characterised in that the bearing point of the control lever (6) is formed by a pivot pin (3) which is rigid with the housing and is disposed in the extension of the connecting line between the bearing pin (4) and the stop (5).

3. Centring unit according to claim 1, characterised in that the bearing point of the control lever (6) is formed by the bearing pin (4), on which the jaws are also mounted.

## Revendications

1. Unité de centrage pour un gouvernail d'avion grâce à laquelle les leviers des soupapes destinés à commander la manoeuvre du gouvernail sont, en cas de panne, ramenés dans leur position neutre au moyen d'une force élastique, caractérisée en ce qu'il est prévu une première pince composée de deux bras principaux (10, 11), lesquels sont formés chacun d'un levier court et d'un levier long et sont disposés de manière à pouvoir pivoter sur un pivot (4) fixé au boîtier, les bras principaux (10, 11) présentant chacun une came d'entraînement (21, 22) plus ou moins à mi-longueur par rapport au point d'articulation et étant reliés par un ressort de traction (20) à leurs extrémités, de sorte que les leviers courts conçus comme des bras d'arrêt (12, 13) s'appuient, grâce au ressort de traction (20) de chaque côté sur une butée (5) fixée au boîtier, en ce que par ailleurs une seconde pince formée de deux leviers coudés est prévue, chacun des leviers coudés étant constitué d'un bras palpeur (27, 28) et d'un bras de ressort (23, 24) et étant disposé également sur le pivot (4) de manière à pouvoir pivoter, les extrémités des bras de ressort (23, 24) étant reliées respectivement à une extrémité d'un bras principal (10, 11) de la première pince par l'intermédiaire d'un ressort palpeur (29, 30) de manière telle que sous l'action des ressorts palpeurs (29, 30) les bras palpeurs (27, 28) reposent également contre la butée (5) dans une mesure telle qu'ils forment ensemble un bec présentant une ouverture de largeur constante définie par l'arrêt (5), en ce qu'il est prévu en outre un levier de commande (6) pourvu d'une roulette (9) et pouvant pivoter autour d'un point d'appui, ladite roulette s'engrenant dans l'ouverture formée entre les bras palpeurs (27, 28) et en ce que par ailleurs les cames d'entraînement (21, 22) prévues sur les bras principaux (10, 11) de la première pince sont disposées à une distance (a) par rapport aux bords correspondants des bras de ressort (23, 24) de sorte qu'un déplacement d'un bras palpeur (27, 28) entraîné par la roulette (9) se produit dans un premier temps en opposition à la force du ressort palpeur correspondant (29, 30) et que une fois la came d'entraînement correspondante (21, 22) atteinte, le déplacement supplémentaire se produit contre la force du ressort de traction (20).

2. Unité de centrage selon la revendication 1, caractérisée en ce que le point d'appui du levier de commande (6) est formé par un pivot (3) fixé au boîtier et prévu dans le prolongement de la ligne de jonction du tourillon (4) avec la butée (5).

3. Unité de centrage selon la revendication 1, caractérisée en ce que le point d'appui du levier de commande (6) est formé par le tourillon (4) sur lequel sont montés également les pinces.
